# EUROPEAN PATENT APPLICATION

(11) **EP 4 442 497 A1**
(43) Date of publication of application: **09.10.2024**
(21) Application number: 24164349.3
(22) Date of filing: 19.03.2024
(51) Int. Cl.: B60L 58/26, B60H 1/00, H01M 10/613, B60L 50/64, H01M 50/141, H01M 10/625

(54) **BATTERY ASSEMBLY FOR A MOTOR VEHICLE AND MOTOR VEHICLE COMPRISING THE SAME**

(30) Priority: 21.03.2023 IT 202300005289
(71) Applicant: FERRARI S.p.A., 41100 Modena (IT)
(72) Inventor: FAVARETTO, Fabrizio, 41100 MODENA (IT)
(74) Representative: Studio Torta S.p.A.

(57) **Abstract**

A battery assembly (10) for a motor vehicle (1) is described comprising a case (11) defining an inner volume (12a, 12b) which is fluidically isolated from the external atmospheric air, and a plurality of batteries (13) arranged in the inner volume (12a, 12b). The inner volume (12a, 12b) contains a gaseous medium comprising dry air and inert gas.

## Description

### CROSS-REFERENCE TO RELATED APPLICATIONS

This patent application claims priority from Italian patent application no. 102023000005289 filed on March 21, 2023, the entire disclosure of which is incorporated herein by reference.

### TECHNICAL FIELD

The present invention concerns a battery assembly for a motor vehicle and a motor vehicle comprising a battery assembly.

### BACKGROUND

As known, electric or hybrid vehicles essentially comprise:
- a chassis;
- a plurality of wheels rotating relative to the chassis around respective rotation axes and adapted to move the chassis relative to the ground on which they rest;
- one or more electric motors adapted to cause rotation of the wheels around the respective axes;
- one or more batteries electrically connected to the electric motors and housed inside an appropriate container.

Motor vehicles are also known comprising systems for regulating the temperature of the batteries. In fact, the batteries that operate at temperatures near to or below the ambient temperature are characterized by greater efficiencies than batteries that operate at higher temperatures. This allows the weight portion of the vehicle intended for storage of the electrical energy to be reduced.

However, it has been observed that the humidity of the air naturally present in the battery container tends to condense as the battery temperature drops. In particular, the inner walls of the container act as condensation plates for the humidity which, once liquefied, tends to accumulate at the bottom of the container.

Since the battery container in electric or hybrid vehicles can have fairly large overall dimensions, the quantity of condensation that forms in the container risks causing short circuits.

In the light of the above, the need is felt to improve the known motor vehicles, in order to limit the risks of short circuits due to the condensation that forms in the battery containers.

An object of the invention is to respond to the above need, preferably in a simple dependable manner.

### DESCRIPTION OF THE INVENTION

The object is achieved by a battery assembly for a motor vehicle as defined in claim 1.

The dependent claims define particular embodiments of the invention.

### BRIEF DESCRIPTION OF THE DRAWINGS

Below, an embodiment of the invention is described for a better understanding thereof by way of non-limiting example and with reference to the attached drawings in which:
- Figure 1 is a schematic lateral view of a motor vehicle comprising a battery assembly according to the present invention with parts removed for clarity;
- Figure 2 is a perspective view of the battery assembly of Figure 1; and
- Figure 3 is a perspective view of the battery assembly of Figures 1 or 2 with parts removed for clarity.

### EMBODIMENTS OF THE INVENTION

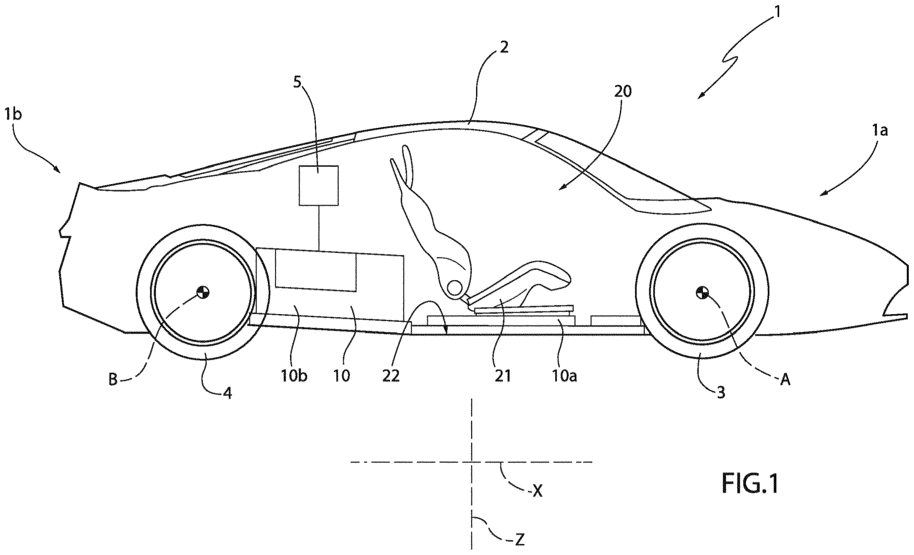

In Figure 1, the reference number 1 is used to indicate, overall, an electric or hybrid motor vehicle comprising:
- a chassis 2;
- a plurality of wheels 3, 4, rotating around respective rotation axes A, B relative to the chassis 2;
- one or more electric motors 5 - illustrated only schematically
- adapted to cause the wheels 3, 4 to rotate about respective axes A, B; and
- a battery assembly 10.

The vehicle 1 defines a front portion 1a and a rear portion 1b opposite each other in a longitudinal direction X of the vehicle. It is therefore possible to identify a pair of front wheels 3 arranged at the front portion 1a and a pair of rear wheels 3 arranged at the rear portion 1b.

The vehicle 1 could comprise an internal combustion engine and/or fuel cells. In addition, preferably, the vehicle 1 is a sports vehicle.

The chassis 2 defines, in turn, a passenger compartment 20 adapted to house the driver and any passengers and comprising one or more seats 21. In the case illustrated, the vehicle 1 comprises only one pair of seats 21 (Figure 1).

The chassis 2 also comprises a bottom 22, which forms the portion nearest to the ground of the chassis 2 in a direction Z orthogonal to the longitudinal direction X and to the ground (Figure 1).

The battery assembly 10 comprises, in turn, a case 11 defining an inner volume 12a, 12b and a plurality of batteries 13 arranged in the inner volume 12a, 12b.

In the case illustrated, the battery assembly 10 comprises a front group 10a and a rear group 10b opposite each other in the longitudinal direction X. In detail, the extension of the front group 10a in the direction Z is less than the extension of the rear group 10b in the same direction Z.

The battery assembly 10 is interposed between the front wheels 3 and the rear wheels 4 in the longitudinal direction X. In further detail, the front group 10a is arranged immediately below the seats 21 in the direction Z and the rear group 10b is arranged at the back of the seats 21 in the longitudinal direction X (Figure 1).

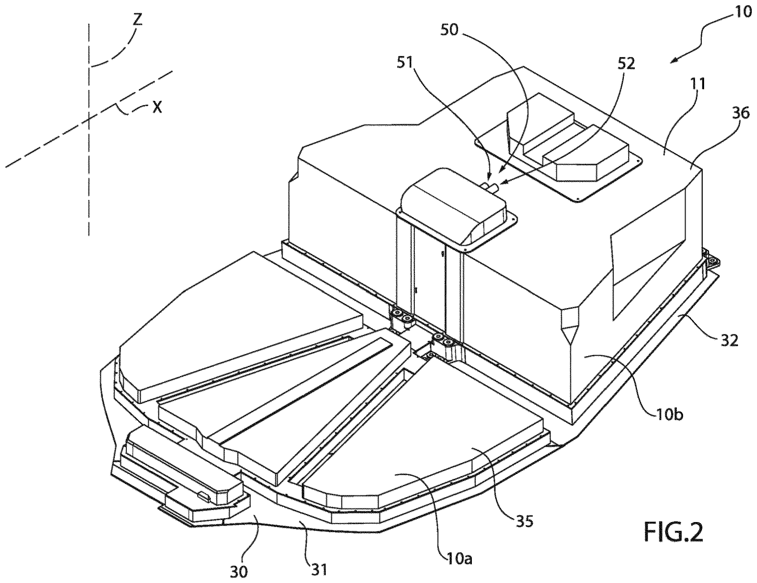

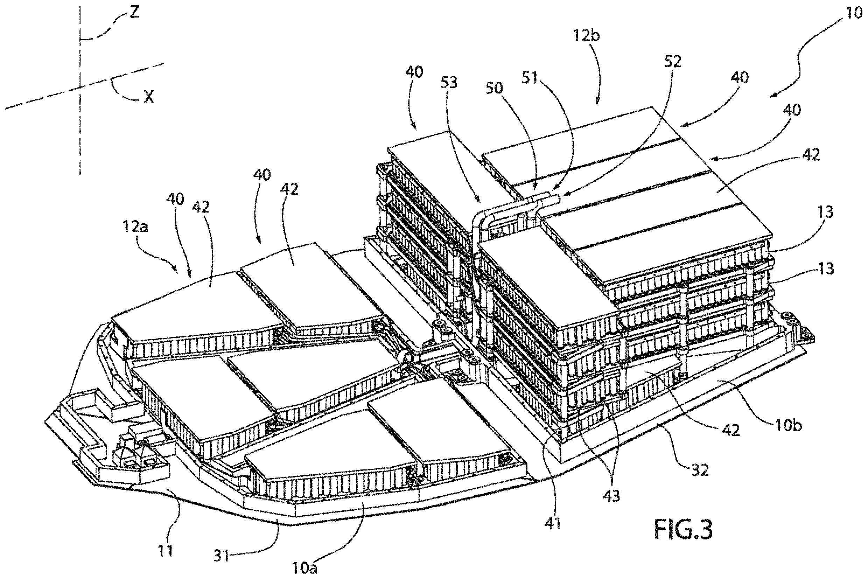

As illustrated in Figures 2 and 3, the front and rear groups 10a, 10b are mechanically connected to each other. Specifically, the case 11 comprises:
- a base body 30, to which the front and rear groups 10a, 10b are fixed or integrated and which is fixed to the bottom 22;
- a cover 35, which couples with the base body 30 and covers the batteries 13 of the front group 10a; and
- a cover 36, which couples with the base body 30 and covers the batteries 13 of the rear group 10b.

The inner volume 12a is the volume enclosed by the base body 30 and by the cover 35 and the inner volume 12b is the volume enclosed by the base body 30 and by the cover 36. In the case illustrated, the inner volumes 12a and 12b are fluidically isolated from each other. However, the inner volumes 12a and 12b could be fluidically connected to each other.

The base body 30 comprises, in turn:
- a plate 31 at the front group 10a; and
- a plate 32 at the rear group 10b and joined to or integrated in the plate 31 (Figure 2).

The front and rear groups 10a, 10b are arranged at an angle to each other (Figure 1). In detail, the plate 31 is parallel or substantially parallel to the ground and the plate 32 is inclined relative to the plate 31. In further detail, proceeding in the longitudinal direction X from the front portion 1a to the rear portion 10b, the distance between the rear group 10b and the ground in the direction Z progressively increases. The rear group 10b is inclined by an angle of less than 10° - preferably between 3° and 5° - relative to the front group 10a.

As illustrated in Figure 3, the front group 10a and the rear group 10b each comprise a plurality of batteries 13 adjacent to one another and grouped in modules 40. Preferably, the batteries 13 are identical to one another and have a cylindrical shape.

Each module 40 comprises a base plate 41 and a plate 42 opposite the plate 41 in the direction Z, between which the batteries 13 belonging to the module are interposed. The batteries 13 of each module 40, furthermore, are directed in a parallel or substantially parallel manner to the direction Z. Each module 40 can furthermore comprise a plurality of columns 43 also interposed between the plate 41 and the relative plate 42. The plates 41, 42 and the columns 43 - where provided - are adapted to support the batteries 13 and keep them in place.

In the case illustrated, the plates 41, 42 of the modules 40 of the front group 10a have trapezoidal or substantially trapezoidal shapes; the plates 41, 42 of the modules 40 of the rear group 10b are rectangular and are identical to each other.

The front group 10a comprises one single layer of modules 40 coplanar to one another and fixed to the plate 31. The rear group 10b comprises a plurality of layers of modules 40 stacked on one another parallel to the direction Z. In particular, in the rear group 10b, the plate 42 of each module 40 acts as a base plate 41 of the respective module 40 arranged immediately above in the direction Z.

Preferably, the arrangement of the batteries 13 in the battery assembly 10 is symmetrical relative to a median plane parallel to the directions X and Z.

The battery group 10 can further comprise one or more power electronic devices (for example, inverter, chopper, switching devices) housed at the inner volume 12a, 12b.

The batteries 13 are electrically connected to one another by means of electric connection elements 13a (Figure 3). In the case illustrated, the electric connection elements 13a are metal bars, for example made of copper.

The vehicle 1 comprises a cooling system 50 adapted to limit the temperature of the batteries 13 and illustrated only partly in Figure 2. By temperature of the batteries 13 we mean the temperature measured at the outer surface of the batteries, in the vicinity thereof, or at the inner volume 12a, 12b in general.

The cooling system 50 comprises a circuit, inside which a cooling fluid is made to run, and a pump for circulation of the cooling fluid, known per se and not illustrated.

The circuit comprises, in turn:
- an inlet opening 51 adapted to allow inlet of the cooling fluid into the inner volume 12a, 12b;
- an outlet opening 52 adapted to allow outlet of the cooling fluid from the inner volume 12a, 12b;
- a fluidic path 53 fluidically interposed between the inlet opening 51 and the outlet opening 52 and which develops within the battery assembly 10.

The fluidic path 53 comprises at least some of the plates 41 and 42, which are hollow and adapted to be crossed by the cooling fluid, and a plurality of channels that establish fluidic communication between the openings 51, 52 and the plates 41, 42 and between the plates 41, 42 reciprocally.

Advantageously, the inner volume 12a, 12b contains a gaseous medium comprising dry air. In detail, the inner volume 12a, 12b contains dry air for at least 880 of its volume.

In further detail, the free space of the inner volume 12a, 12b, namely not occupied by entities in the solid or liquid state, contains exclusively the gaseous medium comprising dry air. In further detail, the free space of the inner volume 12a, 12b is the space not occupied by the batteries 13, by the components of the cooling system 50 arranged in the inner volume 12a, 12b and by the columns 43 (where provided).

According to an alternative embodiment of the present invention, the inner volume 12a, 12b contains a gaseous medium comprising inert gas (for example, nitrogen). In detail, the inner volume 12a, 12b contains inert gas for at least 880 of its volume.

In addition, inert gas can also mean a mixture of inert gases. In detail, the free space of the inner volume 12a, 12b contains exclusively the gaseous medium comprising inert gas.

According to a further alternative embodiment of the present invention, the inner volume 12a, 12b contains gaseous medium comprising dry air and inert gas. In detail, the inner volume 12a, 12b contains dry air and inert gas for at least 880 of its volume. In further detail, the free space of the inner volume 12a, 12b contains exclusively the gaseous medium composed of dry air and inert gas.

In addition, independently of the composition of the gaseous medium, the humidity rate present overall in the inner volume 12a, 12b is below a threshold value. For example, the threshold value corresponds to a relative humidity of 120.

Independently of the composition of the gaseous medium, the inner volume 12a, 12b is hermetically sealed, namely it is permanently fluidically isolated from the external atmospheric air. Nevertheless, the inner volume 12a, 12b allows the passage of the cooling fluid through the fluidic path 53. By external atmospheric air we mean the air present outside the inner volume 12a, 12b. In particular, the external atmospheric air could be inside the motor vehicle 1 or come directly from outside the motor vehicle 1.

More specifically, the cover 35 is permanently fixed to the plate 31 and the cover 36 is permanently fixed to the plate 32.

The operation of the battery assembly 10 is described below.

In use, the battery assembly 10 stores electrical energy and powers the electric motors 5. During operation, the temperature of the batteries is limited by the cooling system 50.

The batteries 13 and the cooling system 50 are completely surrounded by the gaseous medium contained in the inner volume 12a, 12b. Consequently, the cooling system 50 absorbs heat also from the gaseous medium.

Since the inner volume 12a, 12b has a minimum or negligible humidity percentage, the cooling of the gaseous medium does not cause the formation of an appreciable amount of condensation in the inner volume 12a, 12b.

From the above, the advantages of the battery assembly 10 and the motor vehicle 1 according to the invention are evident.

Since the inner volume 12a, 12b comprises dry air and/or inert gas, the quantity of humidity in the inner volume 12a, 12b is null or in any case negligible. Consequently, it is possible to minimize the formation of condensation inside the inner volume 12a, 12b and, consequently, the risk of short circuits.

Lastly it is clear that modifications and variations that do not depart from the protective scope defined by the claims can be made to the battery assembly 10 and the motor vehicle 1 according to the invention.

## Claims

1. Battery assembly (10) for a motor vehicle (1) comprising:
- a case (11) defining an inner volume (12a, 12b); said inner volume (12a, 12b) being hermetic;
- a plurality of batteries (13) arranged in said inner volume (12a, 12b);
**characterized in that** said inner volume (12a, 12b) contains, in use, a gaseous medium comprising dry air and inert gas.

2. Battery assembly according to claim 1, **characterized in that** said inner volume (12a, 12b) contains at least 880 of dry air.

3. Battery assembly according to claim 1, **characterized in that** said inner volume (12a, 12b) contains at least 880 of inert gas.

4. Battery assembly according to claim 1, **characterized in that** said inner volume (12a, 12b) contains at least 880 of dry air and inert gas.

5. Battery assembly according to any one of the foregoing claims, **characterized in that** relative humidity contained in said inner volume (12a, 12b) is, in use, less than 120.

6. Battery assembly according to any one of the foregoing claims, **characterized in that** said inner volume (12a, 12b) is permanently sealed.

7. Battery assembly according to any one of the foregoing claims, **characterized in that** it comprises one or more power electronic devices.

8. Motor vehicle (1) comprising a battery assembly (10) according to any one of the foregoing claims.

9. Motor vehicle according to claim 8, comprising a cooling system (50) adapted to limit the temperature of said batteries (13) .
